## Europäisches Patentamt

## European Patent Office

## Office européen des brevets

(19)

(11) Veröffentlichungsnummer: **0 241 665**
**B1**

(12)
# EUROPÄISCHE PATENTSCHRIFT

(45) Veröffentlichungstag der Patentschrift:
**31.05.89**

(51) Int. Cl.⁴: **B 60 J 1/10,** B 61 D 25/00,
E 06 B 3/66

(21) Anmeldenummer: **87102018.6**

(22) Anmeldetag: **13.02.87**

(54) **Fahrzeugfenster.**

(30) Priorität: **10.04.86 DE 3612073**

(43) Veröffentlichungstag der Anmeldung:
**21.10.87 Patentblatt 87/43**

(45) Bekanntmachung des Hinweises auf die Patenterteilung:
**31.05.89 Patentblatt 89/22**

(84) Benannte Vertragsstaaten:
**DE FR GB IT**

(56) Entgegenhaltungen:
**EP-A-0 105 830**
**EP-A-0 144 620**
**DE-A-3 323 238**
**GB-A-2 077 834**
**US-A-2 285 003**

(73) Patentinhaber: **Messerschmitt- Bölkow- Blohm
Gesellschaft mit beschränkter Haftung, Robert-
Koch- Strasse, D-8012 Ottobrunn (DE)**

(72) Erfinder: **Riegler, Manfred, Wiesenstrasse 3, D-8011
Brunnthal (DE)**

LIBER, STOCKHOLM 1989

## Beschreibung

Die Erfindung bezieht sich auf ein Fahrzeugfenster nach dem Oberbegriff des Patentanspruchs 1. (Siehe z. B. DE-A-3 231 781 oder EP-A-0 105 830).

Bei bekannten, vor allem für Omnibusse verwendbaren Fahrzeugfenstern dieser Art mit einer außenhautbündig in einem winkelförmigen Rahmenprofil angeordneten Isolierverglasung sind die Isolierglas-Teilscheiben, die ja in der Isolierglaseinheit selbst durch den aus einem gummielastischen Dichtungsmaterial, zumeist einschließlich eines Abstandprofils, bestehenden Randabschluß des Scheibenzwischenraums zwar gegenseitig feuchtigkeitssperrend, aber lastempfindlich verbunden sind, in der Weise jeweils einzeln lastübertragend mit dem Rahmenprofil verkoppelt, daß die Innenscheibe an der Fahrzeuginnenseite mit dem hochstehenden Rahmenprofilschenkel verklebt, während die Außenscheibe durch eine den Spalt zwischen der Stirnseite der Isolierverglasung und der zugekenrten Profilfläche ausfüllende Klebstoffschicht am Rahmenprofil gesichert ist. Aufgrund der geringen lastübertragenden Haftfläche der stirnseitigen Außenscheiben-Verklebung besteht unter der Wirkung höherer Lasten, wie sie vor allem bei Hochgeschwindigkeits-Reisezugwagen in Form starker Unterdruck-Außenlasten bei Tunnelfahrten mit Zugbegegnung auf die Außenscheibe einwirken, die Gefahr einer Überdehnung und Delamination der außenscheibenseitigen Verklebung, was Dichtigkeitsverluste und letztlich eine Zerstörung des Fensters zur Folge hat.

Bekannt sind ferner außenhautbündige Isolierglasfenster, die im Hinblick auf höhere Belastungen der Außenscheibe eine direkte, großflächige Einzelverklebung jeder Isolierglas-Teilscheibe am Rahmenprofil aufweisen. Zu diesem Zweck ist das Rahmenprofil entweder mit einem in den Scheibenzwischenraum eingreifenden, einerseits mit der Außen- und andererseits mit der Innenscheibe großflächig verklebten Längssteg versehen (DE-C-3 301 757), oder im Querschnitt stufenförmig mit parallel zueinander versetzten Anschlagflächen ausgebildet, an denen die Innen- bzw. die gegenüber dieser größere Außenscheibe jeweils auf ihrer Innenfläche verklebt ist (DE-A-3 232 781). Neben dem höheren Herstellungsaufwand für die Sonderanfertigung der Isolierverglasung stellt sich bei diesen bekannten Fensterkonstruktionen das Problem, daß die Verklebungen nach dem Zusammenbau des Fensters nicht mehr zugänglich sind und daher die Isolierglaseinheit zum Austausch der Verglasung oder zum Erneuern der Klebstoffschichten nicht ohne Zerstörung vom Rahmenprofil getrennt werden kann.

Der Erfindung liegt die Aufgabe zugrunde, das Fahrzeugfenster der eingangs erwähnten Art so auszubilden, daß jede Isolierglas-Teilscheibe auf fertigungstechnisch einfache Weise dauerhaft dicht, sicher und hochgradig lastfest mit dem Rahmenprofil und über dieses mit der Fahrzeugstruktur verkoppelt und die Isolierglaseinheit problemlos aus dem Rahmenprofil zu entfernen ist.

Diese Aufgabe wird erfindungsgemäß durch das im Anspruch 1 gekennzeichnete Fahrzeugfenster gelöst.

Bei dem erfindungsgemäßen Fahrzeugfenster sind die Isolierglas-Teilscheiben nicht nur gegenseitig feuchtigkeitssperrend abgedichtet, sondern durch die den Scheibenzwischenraum überbrückende Klebstoffverbindung unabhängig vom Rahmenprofil schub-, druck- und vor allem zugfest direkt miteinander verkoppelt und die Anbindung der äußeren Teilscheibe am Rahmenprofil wird von der fahrzeuginnenseitigen Verklebung zwischen der inneren Isolierglas-Teilscheibe und der hochstehenden Rahmenprofil-Anlagefläche mitübernommen, so daß jede Teilscheibe über großflächige, seitliche Klebstoffschichten letztlich ebenso sicher wie bei der obenerwähnten Einzelverklebung am Rahmenprofil befestigt ist, die rahmenprofilseitigen Verklebungen der Isolierverglasung aber nach dem Scheibeneinbau leicht zugänglich bleiben und z. B. zum Austausch der Isolierglaseinheit problemlos aufgetrennt werden können, mit der Besonderheit, daß die an der Außenscheibe angreifenden, statischen und insbesondere dynamischen Belastungen aufgrund der beanspruchten Formstabilität der Verklebungen im wesentlichen ohne Änderungen der Scheibenabstände an das Rahmenprofil übertragen werden, also nur geringfügige, auf das zum Schutz der Verglasung vor der örtlichen Überlastung unbedingt erforderliche Ausmaß beschränkte Relativbewegungen zwischen den Isolierglas-Teilscheiben und dem Rahmenprofil auftreten, durch die die betriebsbedingten Strukturdeformationen aus Durchbiegung unter Last sowie thermische Dilatationsdifferenzen von der Verklebung aufgenommen werden, mit der Folge, daß eine Überdehnung oder Delamination der feuchtigkeitssperrenden Scheibenabdichtung mit Sicherheit verhindert und das Fenster dauerhaft gegen eine umweltbingte Zerstörung geschützt wird.

Die geforderte Formstabilität der randseitig zwischen den Scheiben umlaufenden Klebstoffverbindung kann durch geeignete Wahl nicht nur des Klebematerials selbst, sondern auch der Dicke und Breite der Klebstoffverbindung erzielt werden. Da die Dicke der Klebstoffverbindung jedoch im allgemeinen durch den gegenseitigen Scheibenabstand, also die Breite des Scheibenzwischenraums, vorgegeben ist, ist diese Klebstoffverbindung in besonders bevorzugter Ausgestaltung nach Anspruch 2 mehrschichtig mit scheibenseitigen Klebstoffschichten und einem dazwischenliegenden, verformungsfesten Einsatzstück ausgebildet, so daß sich auch mit relativ weich-elastischen Klebedichtungsmassen eine hohe Formstabilität der Klebstoffverbindung unter Last erzielen läßt, was sich vor allem bei einer schubübertragenden Einbindung jeder einzelnen Isolierglas-Teilscheibe als Versteifungselement der Fahrzeugstruktur empfiehlt. Das Einsatzstück ist nach Anspruch 3 zweckmäßiger-weise zur Stirnseite hin verjüngt ausgebildet und die Klebstoffschichten haben demgemäß eine zu den Rändern des Einsatzstückes hin zunehmende Klebstoffdicke, d.h. die Klebstoffverbindung hat im mittleren Bereich eine größere Federhärte als in den Randzonen, wodurch Spannungsüberhöhungen an den kritischen Randzonen der Verklebung reduziert werden.

Die Einbeziehung eines starren Einsatzstückes in die Klebstoffverbindung bietet die Möglichkeit, trotz hoher Formstabilität der Klebstoffverbindung relativ weiche Klebematerialien zu verwenden, die zugleich die Isolierglasabdichtung mitübernehmen. Wird jedoch für die Isolierglasabdichtung ein spezielles Dichtungsmaterial vorgesehen, so bestehen die Klebstoffverbindung bzw. die Klebstoffschichten gemäß Anspruch 4 vorzugsweise aus einem Klebematerial mit einer hohen Shore-Härte.

Das zumeist mit einem Trocknungsmittel gefüllte, dichtend zwischen den Isolierglas-Teilscheiben im Scheibenzwischenraum angeordnete Abstandprofil ist gemäß Anspruch 5 aus Platzgründen vorzugsweise gegenüber der Scheiben-Stirnseite um die Breite der Klebstoffverbindung nach Innen versetzt, was bei Herstellung der Klebstoffverbindung auch insofern einen fertigungstechnischen Vorteil hat, als durch das Abstandprofil ein maßhaltiger, nach außen offener Formraum für das zunächst noch fließfähige Klebematerial der Klbstoffverbindung im Rand bereich des Scheibenzwischenraums begrenzt wird.

Im Hinblick auf eine einfache konstruktive Gestaltung ist das Rahmenprofil gemäß Anspruch 6 vorzugsweise als Winkelprofil ausgebildet und der Spalt zwischen der Stirnseite der Isolierverglasung und der dieser zugekehrten Rahmenprofilfläche ist durch eine sich bündig zur Fahrzeugaußenhaut zumindest über die gesamte Stirnfläche der äußeren Isolierglas-Teilscheibe erstreckende Klebedichtmasse verschlossen. Diese ist aufgrund der erfindungsgemäßen, rahmenunabhängigen Direktverkoppelung der Isolierglas-Teilscheiben nur allenfalls geringen mechanischen Belastungen und Verformungen unterworfen, bewirkt also eine sehr zuverlässige Spaltabdichtung, und ist - ebenso wie die fahrzeuginnenseitige Verklebung zwischen Innenscheibe und hochstehender Rahmenprofil-Anlagefläche - z. B. für ein oszilierendes Schneidmesser leicht zugänglich, wenn die Isolierglaseinheit als Ganzes aus dem Fensterrahmen ausgebaut werden soll.

Aus Sicherheitsgründen und um zugleich einen Schutz der zumeist UV-empfindlichen Klebstoffschichten auf einfache Weise zu erreichen, ist als äußere Isolierglas-Teilscheibe nach Anspruch 7 vorzugsweise eine Verbundglasscheibe mit einer als UV-Schutzschicht ausgebildeten Verbundfolie vorgesehen

Im Hinblick auf eine weitere konstruktive Vereinfachung und weil die Isolierrglasscheibe als Ganzes austauschbar mit dem Rahmenprofil verkoppelt ist, empfiehlt es sich, das Rahmenprofil nach Anspruch 8 einstückig an der Fahrzeugstruktur anzuformen. In bestimmten Anwendungsfällen, etwa wenn zusätzlich zu der Möglichkeit, die Verklebungen zwischen Isolierglaseinheit und Rahmenprofil zu zerschneiden, eine rasch lösbare Fensterbefestigung z. B. für Notausstiegsfenster benötigt wird, knnn jedoch das Rahmenprofil wahlweise auch getrennt von der Fahrzeugstruktur hergestellt und mit dieser schnell lösbar verbunden sein. Im Hinblick auf eine weitere fertigungstechnische Vereinfachung ist gemäß Anspruch 9 für die Klebstoffverbindung der Isolierglas-Teilscheiben untereinander ein Klebedichtungsmaterial vorgesehen, welches auch für die Verklebung der Isolierglaseinheit mit dem Rahmenprofil verwendet wird.

Die Erfindung wird nunmehr anhand der Zeichnungen beispielsweise näher erläutert. Es zeigen in schematischer Darstellung:

Fig. 1    einen Teilschnitt eines außenhautbündigen Isolierglas-Seitenfensters;

Fig. 2    das Isolierglas-Seitenfenster gemäß Fig. 1 mit einer abgewandelten, ein verformungsfestes Einsatzstück enthaltenden Klebstoffverbindung; und

Fig. 3    eine weitere Ausführungsform des Isolierglas-Seitenfensters.

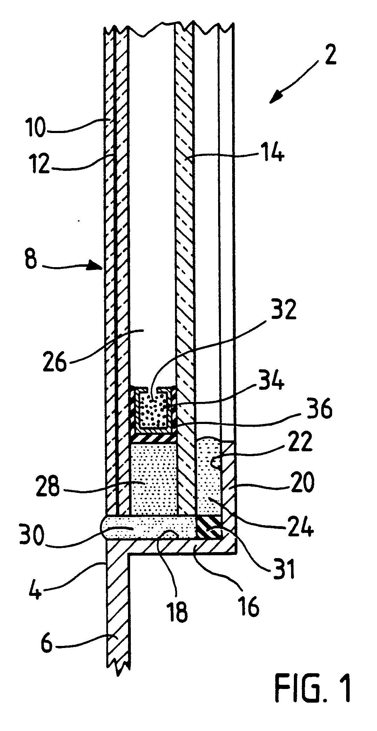

Das Fahrzeug-Seitenfenster 2 gemäß Fig. 1 enthält eine mit der Fahrzeugaußenhaut 4 der Fahrzeugstruktur 6 bündige Zweischeiben-Isolierverglasung 8 mit einer Außenscheibe 10 in Form einer Verbundglasscheibe, die eine als UV-Schutzschicht ausgebildete Verbundfolie 12 aufweist, sowie einer Innenscheibe 14 und ein als Winkelprofil einstückig an der Fahrzeugstruktur 6 angeformtes Fensterrahmenprofil 16, über das die beiden Teilscheiben 10, 14 der Isolierverglasung 8 hochfest und schubübertragend mit der Fahrzeugstruktur 6 verkoppelt werden. Das die Isolierverglasung 8 auf allen vier Seiten umgreifende Rahmenprofil 16 ist mit einer der Stirnseite der Isolierverglasung 8 zugekehrten Profilfläche 18 sowie einem die Isolierverglasung 8 auf der Innenseite übergreifenden, hochstehenden Profilschenkel 20 mit einer seitlichen Anlage- bzw. Klebefläche 22 versehen, an der die Innenscheibe 14 auf der Fahrzeuginnenseite über eine aus einer Klebedichtmasse bestehende Verklebung 24 befestigt ist. Die Breite und Dicke dieser Verklebung 24 ist unter Berücksichtigung der Materialeigenschaften der Klebedichtmasse so bemessen, daß die an der Isolierverglasung 8 angreifenden Lasten von der Verklebung 24 nahezu ohne Verformung übertragen werden, d.h. die Verklebung 24 hat eine sehr hohe Steifigkeit und ihre Dehnung unter Last ist auf das zum Schutz der Verglasung vor einer örtlichen überbeanspruchung unbedingt erforderliche Ausmaß beschränkt.

Die Anbindung der Außenscheibe 10 am Rahmenprofil 16 erfolgt durch eine den Scheibenzwischenraum 26 zwischen den Teilscheiben 10, 14 im Scheibenrandbereich überbrückende Klebstoffverbindung 28, die eine so hohe Formstabilität besitzt, daß die an der Isolierverglasung 8 angreifenden statischen und dynamischen Belastungen im wesentlichen ohne Eigenverformung der Klebstoffverbindung 28 zwischen den teilscheiben 10 und 14 übertragen werden. Aufgrund der geringen Elastizität der Klebstoffverbindung 28, die - ebenso wie bei der Verklebung 24 - auf das zum Schutz der Scheiben gegen übermäßige örtliche Spannungsspitzen erforderliche Mindestmaß beschränkt ist, bleiben die Scheibenabstände im Scheibenrandbereich unter Last nahezu unverändert, wodurch vor allem Relativbewegungen und eine Kraftübertragung im Bereich der kritischen, außenhautseitigen Fensterabdichtung zwischen der Stirnseite der Außenscheibe 10 und dem Rahmenprofil 16 weitgehend unterbunden werden. Diese Fensterabdichtung wird durch eine den Spalt zwischen der Rahmenprofilfläche 18 und der Stirnseite der Isolierverglasung 8 ausfüllende Klebedichtmasse 30 bewirkt.

Unmittelbar an die Klebstoffverbindung 28 nach innen angrenzend ist das bei Isolierverglasungen übliche, mit einem Trocknungsmittel 32 gefüllte Abstandsprofil 34 angeordnet, das in ein gummielastisches, den Scheibenzwischenraum 26 feuchtigkeitssperrend verschließendes Dichtungsmaterial 36 eingebettet ist.

Da die Dicke der Klebstoffverbindung 28 relativ groß und durch den gegenseitigen Scheibenabstand vorgegeben ist und andererseits auch die Breite der Klebstoffverbindung 28 nicht übermäßig groß bemessen werden kann, wird die geforderte, hohe Formstabilität der Klebstoffverbindung 28 gem. Fig. 1 durch Verwendung eines Klebedichtmaterials hoher Shore-Härte, z. B.eines entsprechend eingestellten Polyurethanklebers, erreicht.

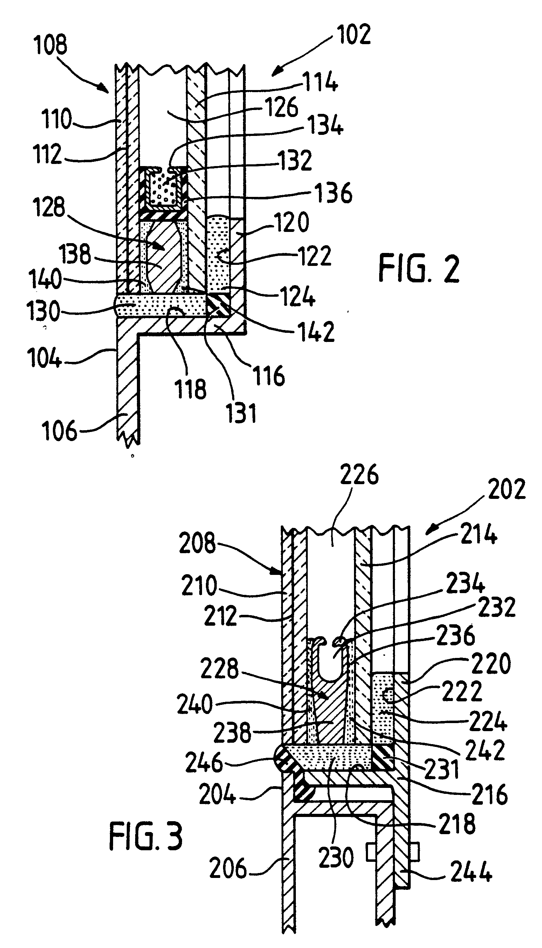

Zur Herstellung des Isolierglasfensters werden zunächst die beiden Teilscheiben 10, 14 durch das Dichtungsmaterials 36 einschließlich des Abstandsprofils 34 mit dem Trocknungsmittel 32 unter Bildung des Scheibenzwischenraums 26 gegenseitig feuchtigkeitssperrend verbunden und anschließend wird der von dem nach innen versetzten Abstandsprofils 34 bzw. dem Dichtungsmaterial 36 begrenzte, nach außen offene Hohlraum zwischen den Scheiben 10, 14 mit dem Klebematerial für die Klebstoffverbindung 28 ausgefüllt, und nach dem Aushärten der Klebstoffverbindung 28 sind die einzelnen Teilscheiben 10, 14 der Isolierglaseinheit 8 im Scheibenrandbereich unabhängig vom Rahmenprofil 16 mit hoher Festigkeit und Steifigkeit direkt miteinander großflächig verkoppelt. Die Isolierglaseinheit 8 wird anschließend von außen in das mit dem Klebedichtmaterial für die Verklebung 24 und die außenhautseitige Spaltabdichtung versehene Rahmenprofil 16 eingedrückt, wobei fertigungsbedingte Maßabweichungen des Rahmenprofils 16 durch das Klebedichtmaterial ausgeglichen werden. Soll die Verglasung irgendwann ausgetauscht oder die Verklebung erneuert werden, so kann die Isolierglaseinheit 8 als Ganzes dadurch aus dem Rahmenprofil 16 entfernt werden, daß einerseits die Verklebung 24 von der Fahrzeuginnenseite aus und andererseits die Klebedichtmasse 30 im stirnseitigen Dichtspalt der Verglasung von der Fahrzeugaußenseite aus z. B. mit Hilfe eines oszillierenden Schneidmessers durchtrennt wird. Weil dieser stirnseitige Spalt im wesentlichen nur zur Außenabdichtung der Isolierverglasung 8, nicht aber zur lastfesten, formstabilen Verkoppelung jeder einzelnen Teilscheibe 10 und 14 mit dem Rahmenprofil 16 benötigt wird, ist es wahlweise auch möglich, diesen Spalt anstatt mit der Klebedichtmasse 30 mit einem reinen Dichtungsmaterial guter Haftfähigkeit, aber geringer Festigkeit, und auch nur im Bereich der Stirnseite der Außenscheibe 10 feuchtigkeitsdicht zu verschließen, so daß die Isolierglaseinheit 8 mit dem Rahmenprofil 16 nur durch die Verklebung 24 hochfest verbunden ist und daher der Ausbau der Isolierglaseinheit 8 aus dem Rahmenprofil 16 noch rascher und einfacher, etwa durch Einlegen eines (nicht gezeigten) Reißdrahtes in die Verklebung 24 für Notausstiegszwecke, durchgeführt werden kann. Zur Erleichterung des Ausglasens ist es zweckmäßig, eine Moosgummischnur 31 in das Rahmenprofil 16 einzulegen. Das Ausführungsbeispiel gemäß Fig. 2, bei dem die der Fig. 1 entsprechenden Bauteile durch ein jeweils um 100 erhöhtes Bezugszeichen gekennzeichnet sind, hat im wesentlichen die gleiche Bau- und Funktionsweise wie das erste Ausführungsbeispiel und unterscheidet sich von diesem durch eine andersartige Klebstoffverbindung 128, deren unter Last hohe Formstabilität in diesem Fall durch Verringerung der wirksamen Klebstoffdicke erreicht wird. Zu diesem Zweck enthält die Klebstoffverbindung 128, deren Gesamtdicke natürlich wiederum durch den Scheibenabstand vorgegeben ist, ein starres Einsatzstück 138, das jeweils über eine relativ dünne Klebstoffschicht 140, 142 mit der Außen- bzw. Innenscheibe 110, 114 hochfest verkoppelt ist. Eine solche Klebstoffverbindung 128 gestattet trotz hoher Gesamt-Federhärte die Verwendung eines relativ weichen Klebstoffs für die Klebstoffschichten 140, 142, so daß diese - anstatt aus einem Kleber hoher Shore-Härte - auch aus der gleichen Klebedichtmasse wie die Verklebung 124 oder sogar, wie gezeigt, aus der gleichen, feuchtigkeitssperrenden Dichtmasse wie die Abdichtung 136 des Abstandprofils 134 hergestellt sein können. Das Einsatzstück 138 ist zu seinen Stirnseiten hin verjüngt ausgebildet, also im Querschnitt beidseitig konvex gewölbt oder trapezförmig mit abgerundeten Ecken ausgeführt, und demgemäß haben die Klebstoffschichten 140, 142 jeweils eine entsprechend zunehmende Klebstoffdicke, d.h. die Steifigkeit der Klebstoffverbindung 128 ist in den Randzonen zur Stirnseite der Isolierverglasung 108 und zum Abstandsprofil 134 hin geringer als im mittleren Bereich, um eine Verwölbung der Teilscheiben 110, 114 unter Last ohne übermäßige Spannungsspitzen an ihrer als Einspannstelle wirkenden Klebstoffverbindung 128 zu ermöglichen.

Fig. 3, in der die dem ersten Ausführungsbeispiel baugleichen Elemente durch ein entsprechendes, jedoch um 200 erhöhtes Bezugszeichen gekennzeichnet sind, zeigt die Möglichkeit, das Rahmenprofil 216 getrennt von der Fahrzeugstruktur herzustellen und an dieser über einen abwärts gerichteten zusätzlichen Profilschenkel 244 z. B. durch schematisch dargestellte Verschraubungen lösbar zu befestigen, wobei die Profilfläche 218 verkürzt ausgebildet ist und vor der Außenhaut 204 endet und zur äußeren Fensterabdichtung zwischen Außenhaut 204, Außenscheibe 210 und Rahmenprofil 216 ein gut haftendes Dichtungsmaterial 246 eingedrückt ist. Bei diesem Ausführungsbeispiel sind ferner das Abstandprofil 234 und das die Kleberstärke verringernde Einsatzstück 238 als einstückiges Bauteil ausgeführt, und für die Klebstoffschichten 240, 242 wird ebenso wie für die feuchtigkeitssperrende Abdichtung 236 des Scheibenzwischenraums 226 das gleiche Klebedichtungsmaterial wie für die Verklebung 224 verwendet. Zum Ausgleich von Fertigungstoleran zen der Fahrzeugstruktur 206 und/oder des Rahmenprofils 216 wird beim Fenstereinbau zunächst das Rahmenprofil 216 an der Fahrzeugstruktur 206 befestigt und anschliessend die unter Einbeziehung der Klebstoffverbindung 228 vormontierte Isolierglaseinheit 208 in das mit dem Klebedichtmaterial für die Verklebung 224 und die Spaltabdichtung 230 versehene Rahmenprofil 216 eingedrückt und dann nach dem Aushärten dieses Klebedichtmaterials 224, 230 die Außenabdichtung 246 angebracht. Im übrigen ist die Bau- und Funktionsweise des Fahrzeugfensters gemäß Fig 3 die gleiche wie bei den ersten beiden Ausführungsbeispielen.

## Patentansprüche

1. Fahrzeugfenster, insbesondere Seitenfenster für Hochgeschwindigkeits-Reisezugwagen, mit einer außenhautbündigen Zwei- oder Mehrscheiben-Isolierverglasung (8, 108, 208), die an ihrer inneren Teilscheibe (14, 114, 214) mit einer dieser (14, 114, 214) im Randbereich auf der Fahrzeuginnenseite zugekehrten, hochstehenden Anlagefläche eines an der Fahrzeugstruktur (6, 106, 206) angeordneten, steifen Fensterrahmenprofils (26, 116, 216) feststehend verklebt ist,
dadurch <u>gekennzeichnet</u>, daß
zur rahmenprofilunabhängigen gegenseitigen Direktverkoppelung zwischen den Isolierglas-Teilscheiben (10, 110, 210; 14, 114, 214) eine den Scheibenzwischenraum (26, 126, 226) im Seitenrandbereich überbrückende Klebstoffverbindung (28, 128, 228) derart formstabil, ausgebildet ist, daß die auf die äußere Teilscheibe (10, 110, 210) einwirkenden Lasten im wesentlichen ohne Änderung der randseitigen Scheibenabstände über die Klebstoffverbindung (28, 128, 228) an die innere Teilscheibe (14, 114, 214) und über diese an das Rahmenprofil (16, 116, 216) übertragbar sind.

2. Fahrzeugfenster nach Anspruch 1,
dadurch <u>gekennzeichnet</u>, daß die formstabile Klebstoffverbindung (28) mehrschichtig mit scheibenseitigen Klebstoffschichten (140, 142) und einem dazwischenliegenden, verformungssteifen Einsatzstück (138) ausgebildet ist.

3. Fahrzeugfenster nach Anspruch 2,
dadurch <u>gekennzeichnet</u>, daß das Einsatzstück (138; 238) zur Stirnseite hin verjüngt und die Klebstoffschichten (140, 142; 240, 242) mit entsprechend zunehmender Klebstoffdicke ausgebildet sind.

4. Fahrzeugfenster nach einem der vorhergehenden Ansprüche,
dadurch <u>gekennzeichnet</u>, daß die Klebstoffverbindung (28) bzw. die Klebstoffschichten (140, 142; 240, 242) aus einem Klebematerial hoher Shore-Härte bestehen.

5. Fahrzeugfenster nach einem der vorhergehenden Ansprüche,
dadurch <u>gekennzeichnet</u>, daß unmittelbar an die Klebstoffverbindung (28) nach innen angrenzend das dichtend zwischen die Isolierglas-Teilscheiben (10, 14) eingesetzte Abstandprofil (34) angeordnet ist.

6. Fahrzeugfenster nach einem der vorhergehenden Ansprüche,
dadurch <u>gekennzeichnet</u>, daß das Rahmenprofil (16) als Winkelprofil ausgebildet und der Spalt zwischen der Stirnseite der Isolierverglasung (8) und der dieser zugekehrten Rahmenprofilfläche (18) durch eine sich bündig zur Fahrzeugaußenhaut (4) zumindest über die gesamte Stirnfläche der äußeren Isolierglas-Teilscheibe (10) erstreckende Klebedichtmasse (30) verschlossen ist.

7. Fahrzeugfenster nach einem der

vorhergehenden Ansprüche,

dadurch <u>gekennzeichnet</u>, daß als äußere Isolierglas-Teilscheibe (10) eine Verbundglasscheibe mit einer als UV-Schutzschicht ausgebildeten Verbundfolie (12) vorgesehen ist.

8. Fahrzeugfenster nach einem der vorhergehenden Ansprüche,

dadurch <u>gekennzeichnet</u>, daß das Fensterrahmenprofil (16) einstückig an der Fahrzeugstruktur (4) angeformt ist.

9. Fahrzeugfenster nach einem der vorhergehenden Ansprüche,

dadurch <u>gekennzeichnet</u>, daß für die Verklebung der Isolierglas-Teilscheiben (10, 14) untereinander und mit dem Rahmenprofil (16) die gleiche Klebedichtmasse (24, 28) vorgesehen ist.


## Claims

1. A vehicle window, more especially a side window for high-speed passenger-train carriages, having two-pane or multi-pane insulating glazing (8, 108, 208) which is flush with the outer skin and which is fixedly bonded by its inner part pane (14, 114, 214) to an upstanding abutment surface, facing this (14, 114, 214) in the edge region on the inside of the vehicle, of a stiff windowframe profile (16, 116, 216) which is arranged on the vehicle structure (6, 106, 206), characterised in that for the mutual direct coupling, independent of the frame profile, between the partial panes (10, 110, 210; 14, 114, 214) of insulating glass an adhesive connection (28, 128, 228) which bridges the pane interstice (26, 126, 226) in the side edge region is formed in such an inherently stable manner that the loads acting on the outer part pane (10, 110, 210) are transferable substantially without changing of the edge-side pane spacings by way of the adhesive connection (28, 128, 228) to the inner part pane (14, 114, 214) and by way of this to the frame profile (16, 116, 216).

2. A vehicle window according to claim 1, characterised in that the inherently stable adhesive connection (28) is formed in multi-layer manner with adhesive layers (140, 142) adjacent the panes and a deformation-resistant insert (138) disposed therebetween.

3. A vehicle window according to claim 2, characterised in that the insert (138; 238) is tapered towards the end face and the adhesive layers (140, 142; 240, 242) are formed therewith correspondingly increasing thickness of adhesive.

4. A vehicle window according to one of the preceding claims, characterised in that the adhesive connection (28) or respectively the adhesive layers (140, 142; 240, 242) consist of an adhesive material of high Shore hardness.

5. A vehicle window according to one of the preceding claims, characterised in that arranged immediately adjacent inwardly of the adhesive connection (28) is the distance profile (34) which is inserted in sealing manner between the part panes (10, 14) of insulating glass.

6. A vehicle window according to one of the preceding claims, characterised in that the frame profile (16) is designed as an angle profile and the gap between the end face of the insulating glazing (8) and the frame-profile surface (18) facing this is sealed by an adhesive sealing compound (30) which extends flush with regard to the outer skin (4) of the vehicle at least over the entire end surface of the outer part pane (10) of insulating glass.

7. A vehicle window according to one of the preceding claims, characterised in that a composite glass pane having a composite foil (12) designed as an UV-protective layer is provided as the outer part pane (10) of insulating glass.

8. A vehicle window according to one of the preceding claims, characterised in that the window-frame profile (16) is integrally formed in one piece on the vehicle structure (4).

9. A vehicle window according to one of the preceding claims, characterised in that the same adhesive sealing compound (24, 28) is provided for the bonding of the partial panes (10, 14) of insulating glass one with another and with the frame profile (16).


## Revendications

1. Fenêtre de vehicule, notamment fenêtre latérale pour des voitures à voyageurs de trains à grande vitesse, comprenant un vitrage isolant (8, 108, 208) double ou multiple, qui est aligne avec le revêtement extérieur du vehicule et colle de manière solide par sa vitre intérieure (14, 114, 214) à une surface d'appui prevue en saillie, en étant tournée vers ladite vitre (14, 114, 214) dans la zone du bord, du côté intérieur du véhicule, sur un profile rigide (26, 116, 216) de cadre de fenêtre dispose sur la structure (6, 106, 206) du véhicule, caractérisée en ce que, pour le couplage direct mutuel, indépendant du profilé de cadre, entre les vitres (10, 110, 210; 14, 114, 214) du vitrage isolant, une liaison par colle (28, 128, 228), remplissant l'intervalle (26, 126, 226) entre les vitres dans la zone du bord latéral, est réalisée de façon indéformable de telle manière que les charges agissant sur la vitre extérieure (10, 110, 210) puissent être transmises, sensiblement sans modification des distances entre les vitres sur le bord, par la liaison par colle (28, 128, 228) à la vitre intérieure (14, 114, 214) et par celle-ci au profilé de cadre (16, 116, 216).

2. Fenêtre de véhicule selon la revendication 1, caractérisée en ce que la liaison par colle (28) indéformable est réalisée en plusieurs couches avec des couches de colle (140, 142) côté vitre et un insert (138) resistant à la déformation, se trouvant entre les couches de colle.

3. Fenêtre de véhicule selon la revendication 2, caractérisée en ce que l'insert (138; 238) diminue d'épaisseur vers le côté frontal et l'épaisseur des couches de colle (140, 142, 240, 242) augmente de manière correspondante.

4. Fenêtre de véhicule selon l'une quelconque des revendications précédentes, caractérisée en ce que la liaison par colle (28) ou les couches de colle (140, 142; 240, 242) sont constituées par une colle d'une dureté Shore élevée.

5. Fenêtre de vehicule selon l'une quelconque des revendications précédentes, caractérisée en ce que le profile intercalaire (34), inséré avec d'étanchéité entre les vitres (10, 14) du vitrage isolant, est disposé de façon directement adjacente vers l'intérieur à la liaison par colle (28).

6. Fenêtre de véhicule selon l'une quelconque des revendications précédentes, caractérisée en ce que le profile de cadre (16) est réalisé comme cornière et la fente entre le côtéfrontal du vitrage isolant (8) et la surface (18) du profilé de cadre, tournée vers le vitrage, est fermée par une masse de colle d'étanchéité (30) s'étendant, de manière alignée avec le revêtement extérieur (4) du véhicule, au moins sur toute la face frontale de la vitre extérieure (10) du vitrage isolant.

7. Fenêtre de véhicule selon l'une quelconque des revendications précédentes, caractérisée en ce qu'une vitre en verre feuilleté, comprenant une feuille de liaison (12) réalisée comme couche de protection contre les rayons UV, est prévue comme vitre extérieure (10) du vitrage isolant.

8. Fenêtre de véhicule selon l'une quelconque des revendications précédentes, caractérisée en ce que le profile de cadre (16) de la fenêtre est realisé d'une seule pièce avec la structure (4) du véhicule.

9. Fenêtre de véhicule selon l'une quelconque des revendications précédentes, caractérisée en ce que la même masse de colle d'étanchéité (24, 28) est prévue pour le collage des vitres (10, 14) du vitrage isolant entre elles et avec le profilé de cadre (16).

FIG. 1

FIG. 2

FIG. 3